# EUROPEAN PATENT APPLICATION

(11) **EP 4 766 007 A1**
(43) Date of publication of application: **24.06.2026**
(21) Application number: 24868669.3
(22) Date of filing: 19.09.2024
(51) Int. Cl.: H04W 76/22, H04W 76/12, H04W 88/14

(54) **N4 SESSION CONTEXT UPDATE METHOD AND DEVICE CONSIDERING UPF MODULE**

(30) Priority: 20.09.2023 KR 20230125606
(71) Applicant: Samsung Electronics Co., Ltd., Suwon-si, Gyeonggi-do 16677 (KR)
(72) Inventor: KWEON, Kisuk, Suwon-si Gyeonggi-do 16677 (KR)
(74) Representative: Gulde & Partner
(86) International application number: PCT/KR2024/014098
(87) International publication number: WO 2025/063692

(57) **Abstract**

The disclosure relates to a 5G or 6G communication system for supporting a higher data transmission rate. A method performed by a user plane function (UPF) entity in a wireless communication system according to an embodiment of the present disclosure comprises the steps of: receiving, from a session management function (SMF) entity, an N4 session establishment request message including a packet detection rule (PDR) and a packet functionality rule (PFR) corresponding to the PDR; determining at least one UPF function required to be applied to a service data flow on the basis of the PDR and the PFR; and transmitting the service data flow to which the at least one UPF function is applied, wherein the PFR includes information on the at least one UPF function required to be applied to the service data flow.

## Description

### [Technical Field]

The disclosure relates to a wireless communication system and, particularly to a method and a device for updating an N4 session context when a user plane function (UPF) is modularized.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, Al-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

As described above, with the advancement of mobile communication systems, various services can be provided, and accordingly, there is a need for methods to effectively provide such services.

### [Disclosure of Invention]

### [Technical Problem]

The disclosure provides a method and a device for effectively updating an N4 session context in a wireless communication system.

### [Solution to Problem]

Base on the discussion described above, a method for processing a control signal in a wireless communication system according to the disclosure may include receiving a first control signal transmitted from a base station, processing the received first control signal, and transmitting, to the base station, a second control signal generated based on the processing.

### [Advantageous Effects of Invention]

Embodiment set forth herein provide a device and a method for effectively updating an N4 session context in a wireless communication system.

### [Brief Description of Drawings]

FIG. 1 illustrates a structure of a 5G network according to an embodiment of the disclosure.
FIG. 2 illustrates an example of a UPF module according to an embodiment of the disclosure.
FIG. 3 illustrates an example of deploying a light UPF and a heavy UPF according to an embodiment of the disclosure.
FIG. 4 illustrates a traffic filter that classifies service data flows based on their types, according to an embodiment of the disclosure.
FIG. 5A and FIG. 5B are flowcharts illustrating a protocol data unit (PDU) session establishment procedure according to an embodiment of the disclosure.
FIG. 6 illustrates a structure of a UE according to embodiments of the disclosure.
FIG. 7 illustrates a structure of a base station according to an embodiment of the disclosure.
FIG. 8 illustrates a structure of a network entity according to an embodiment of the disclosure.

### [Mode for the Invention]

Hereinafter, exemplary embodiments of the disclosure will be described in detail with reference to the accompanying drawings. It should be noted that, in the accompanying drawings, the same or like elements are designated by the same or like reference signs as much as possible. In addition, a detailed description of known functions or configurations that may make the subject matter of the disclosure unclear will be omitted.

In describing the embodiments of the disclosure, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink (DL)" refers to a radio link via which a base station transmits a signal to a terminal, and an "uplink (UL)" refers to a radio link via which a terminal transmits a signal to a base station. Furthermore, in the following description, LTE, LTE-A, or 5G systems may be described by way of example, but the embodiments of the disclosure may also be applied to other communication systems having similar technical backgrounds or channel types. Examples of such communication systems may include the 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS, eNode B, or gNode B), and the downlink refers to a radio link via which the base station transmits data or control signals to the UE. The above multiple access scheme may separate data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. Also, the data rate required for the 5G communication system may be obtained using a frequency bandwidth more than 20MHz in a frequency band of 3 to 6GHz or 6GHz or above, instead of transmitting signals using a transmission bandwidth up to 20MHz in a band of 2GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km²) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC is a cellular-based mission-critical wireless communication service. For example, URLLC may be used for services such as remote control for robots or machines, industrial automation, unmanned aerial vehicles, remote health care, and emergency alert. Thus, URLLC must provide communication with ultra-low latency and ultra-high reliability. For example, a service supporting URLLC must satisfy an air interface latency of less than 0.5ms, and also requires a packet error rate of 10⁻⁵ or less. Therefore, for the services supporting URLLC, a 5G system must provide a transmit time interval (TTI) shorter than those of other services, and also may require a design for assigning a large number of resources in a frequency band in order to secure reliability of a communication link.

The three services in 5G, that is, eMBB, URLLC, and mMTC, may be multiplexed and transmitted in a single system. In this case, different transmission/reception techniques and transmission/reception parameters may be used between services in order to satisfy different requirements of the respective services. Of course, 5G is not limited to the three services described above.

As used herein, each of such phrases as "A and/or B," "A or B," "at least one of A and B," "at least one of A or B," "A, B, or C," "at least one of A, B, and C," and "at least one of A, B, or C," may include all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order).

In the following description, a base station is an entity that allocates resources to terminals, and may be at least one of a Node B, a base station (BS), an eNode B (eNB), a gNode B (gNB), a wireless access unit, a base station controller, and a node on a network. A terminal may include a user equipment (UE), a mobile station (MS), a cellular phone, a smartphone, a computer, or a multimedia system capable of performing a communication function. Furthermore, the embodiments of the disclosure as described below may also be applied to other communication systems having similar technical backgrounds or channel types to the embodiments of the disclosure. Moreover, based on determinations by those skilled in the art, the embodiments of the disclosure may also be applied to other communication systems through some modifications without significantly departing from the scope of the disclosure.

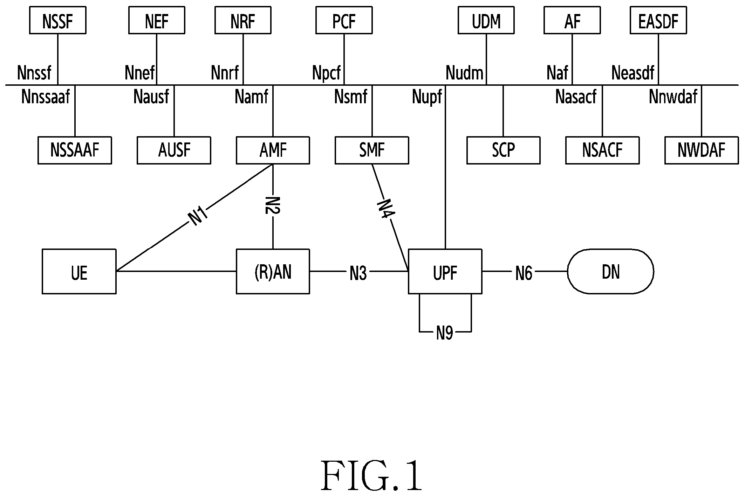

In the disclosure, a network technology may refer to a standard specification (e.g., TS 23.501, TS 23.502, TS 23.503, etc.) defined by the international telecommunication union (ITU) or 3GPP, and each element included in a network structure of FIG. 1 may indicate a physical entity, or software performing an individual function or hardware combined with the software. In the drawings, reference numerals represented by Nx, such as N1, N2, N3,..., indicate known interfaces between network functions (NFs) in a 5G core network (CN), and a relevant description may refer to a standard specification (e.g., TS 23.501) and thus a detailed description will be omitted.

In the following description, terms for identifying access nodes, terms referring to network entities or network functions (NFs), terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, some of terms and names defined in the 3rd generation partnership project (3GPP) standards may be used for the sake of descriptive convenience. However, the disclosure is not limited by these terms and names, and may be applied in the same way to systems that conform other standards.

FIG. 1 illustrates a structure of a 5G network according to an embodiment of the disclosure.

Referring to FIG. 1, the 5G network may include network entities (NEs) or network functions (NFs) described as follows.

A (radio) access network ((R)AN) is an entity that performs radio resource allocation for a UE, and may be at least one of an eNode B, a Node B, a base station (BS), a next generation radio access network (NG-RAN), a 5G access network (5G-AN), a wireless access unit, a base station controller, or a node on the network.

A terminal may include a user equipment (UE), a next generation UE (NG UE), a mobile station (MS), a cellular phone, a smartphone, an Internet of Things (IoT) device, or a multimedia system capable of performing a communication function.

Also, in the following description of embodiments of the disclosure, 5G systems will be described by way of example, but the embodiments of the disclosure may also be applied to other communication systems having similar technical backgrounds. Furthermore, based on determinations by those skilled in the art, the embodiments of the disclosure may be applied to other communication systems having similar backgrounds or channel types through some modifications without significantly departing from the scope of the disclosure.

As wireless communication systems evolve from 4G systems to 5G systems, a new core network (CN) referred to as a next generation core (NG core) or a 5G core network (5GC) has been defined. The new core network may fully virtualize existing network entities (NEs) into network functions (NFs). According to an embodiment of the disclosure, a network function may refer to a network entity, a network component, and a network resource.

According to an embodiment of the disclosure, the 5GC may include NFs illustrated in FIG. 1. It is obvious that the disclosure is not limited to the example of FIG. 1 and the 5GC may include a larger or smaller number of NFs than the NFs illustrated in FIG. 1.

An access and mobility management function (AMF) may be a network function that manages access and mobility of a UE. For example, the AMF may perform network functions such as registration, connection, reachability, mobility management, access verification, authentication, and mobility event generation for a UE.

A session management function (SMF) may be a network function that manages packet data network (PDN) connection provided to a user equipment (UE). PDN connection may be called a protocol data unit (PDU) session. For example, the SMF may perform network functions, such as a session management function through session establishment, modification, and release, and tunnel maintenance between a user plane function (UPF) and the RAN required therefor, user plane (UP) selection and control, traffic processing control at the UPF, and charging data collection control.

A policy control function (PCF) may be a network function that applies a service policy, a charging policy, and a PDU session policy of a mobile communication service provider to a UE.

A unified data management (UDM) may be a network function that stores information about a subscriber. For example, the UDM may perform functions, such as generation of authentication information for 3GPP security, processing of a user identifier (user ID), management of a list of network functions supporting a UE, and management of subscription information.

A network exposure function (NEF) may be a function that provides information about a UE to a server located outside the 5G network. Additionally, the NEF may provide a function that provides information required for a service to the 5G network and stores same in a unified data repository (UDR).

A user plane function (UPF) may be a function that serves as a gateway for delivering user data (PDU) to a data network (DN). More specifically, the UPF may process data to transfer data transmitted by a UE to an external network or transfer incoming data from an external network to a UE. As an example, the UPF 131 may perform network functions, such as serving as an anchor between radio access technologies (RAT), packet routing and forwarding, packet inspection, user plane policy application, traffic usage report creation, and buffering.

A network repository function (NRF) may perform an NF discovery function.

An authentication server function (AUSF) may perform UE authentication in a 3GPP access network and a non-3GPP access network.

A network slice selection function (NSSF) may perform selection of a network slice instance provided to a UE.

A network data analytics function (NWDAF) may collect data from various NFs for the purpose of efficient operation of the 5GC network. The collected data may be analyzed using a machine learning (ML) model, and the analysis result may be provided back so as to the NFs to help each NF to provide an efficient network service.

An application function (AF) may communicate with a service provider network to allow an external server (application server) to use a network service provided by the service provider network. The AF may be classified into an internal AF and an external AF according to deployment entities. An internal AF deployed by a network service provider may directly communicate with NFs within the service provider's network. An AF deployed by a service provider (3rd party service provider) may need to pass through the NEF in order to communicate with NFs within the service provider network.

A data network (DN) may be a data network over which a UE transmits or receives data to use a service of a network service provider or a 3rd party service.

A UE may include an IoT device. The IoT device may include a device that does not use battery power or operates with very low power, and such an IoT device may be referred to as an ambient IoT device (or simply ambient IoT).

According to an embodiment of the disclosure, when a UPF is configured by one or more modules and functions (hereinafter, only referred to as modules), a scheme of updating, by an SMF, an N4 session context used to control the UPF is proposed.

### [UPF Modular]

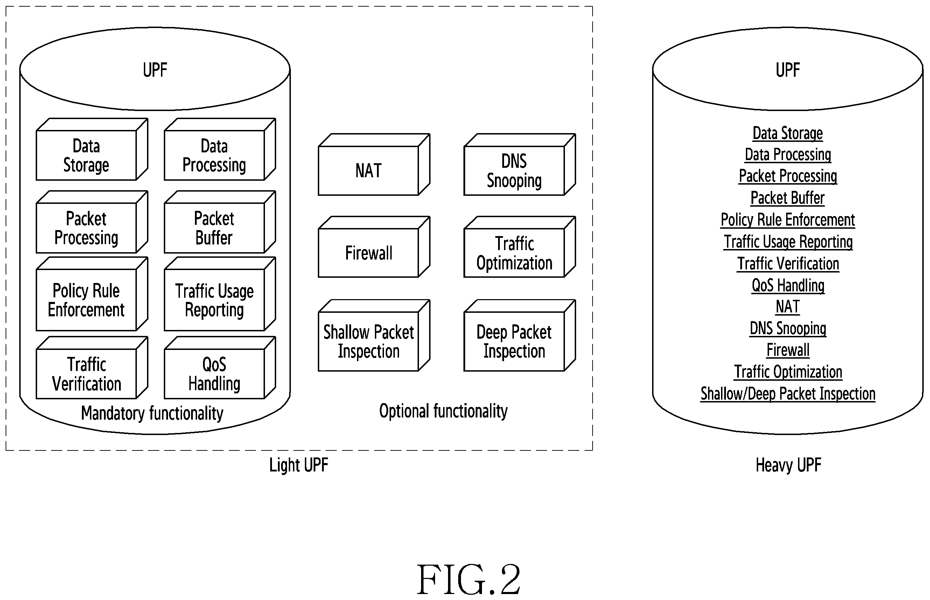

FIG. 2 illustrates an example of a UPF module according to an embodiment of the disclosure.

Services provided by the UPF may be classified into mandatory functionality and optional functionality. The mandatory functionality may include functions required to provide mandatory services of the UPF defined in a standard, and the optional functionality may include functions required to provide optional services other than the mandatory services of the UPF defined in the standard. For example, the UPF may receive a user packet from the DN, transmit the user packet to a UE, and transmit a user packet received from the UE to the DN. In order to provide such services, the UPF requires a packet processing module. However, a Shallow/Deep Packet Inspection for inspecting a user packet received from the UE or DN is not a service of the UPF defined in the standard.

By modularizing each functionality of the UPF, resources required for operation of each module may be individually and flexibly scaled up or down, thereby enabling efficient use of resources allocated to the UPF. In addition, since optional functionality rather than mandatory functionality may be added to or removed from the UPF at any time as needed, a UPF having only mandatory functionality may be provided at a relatively lower cost than an existing UPF including all functions.

In the disclosure, all functions of the UPF are modularized according to a modular design. Referring to FIG. 2, a UPF including only mandatory functionality, excluding the optional functionality, among the functions of the UPF is referred to as a light UPF. In addition, a UPF including all functions including mandatory functionality and optional functionality without modularizing the functions of the UPF, as shown on a right side of FIG. 2, is referred to as a heavy UPF. In the disclosure, distinguishing the UPF as a light UPF and a heavy UPF is merely for convenience of description of an embodiment, and the names for the distinction (light UPF and heavy UPF) are not limited thereto.

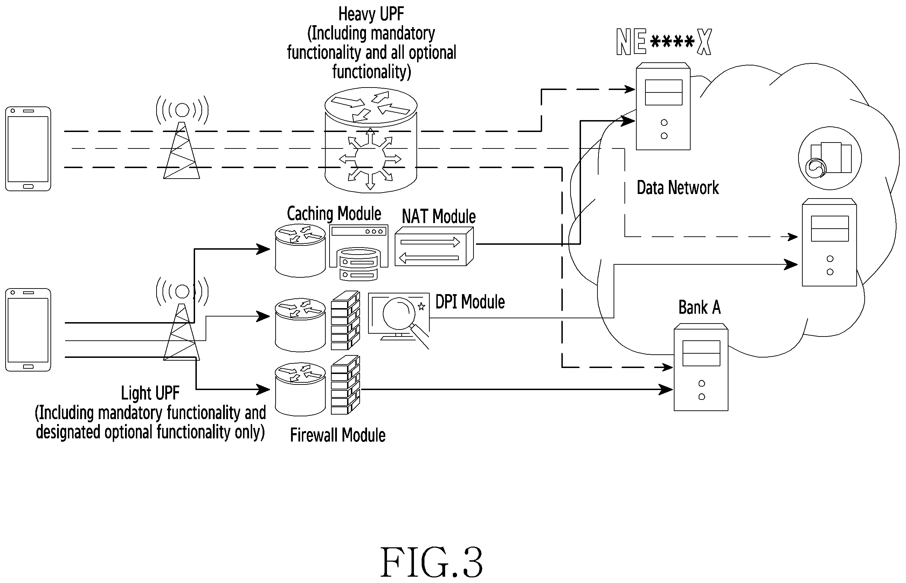

FIG. 3 illustrates an example of deploying a light UPF and a heavy UPF according to an embodiment of the disclosure. In a scenario in which only a heavy UPF is deployed, the same UPF is used to process service data flows regardless of types of service data flows used by a UE. However, in a scenario in which a light UPF is deployed, a light UPF responsible for a service data flow may be selected according to a type of service data flow used by a UE, by considering optional functionality additionally provided by the light UPF. For example, in the case of a service data flow for a banking service, a light UPF providing an optional firewall functionality may be selected, because security is important. In the case of a service data flow for a video streaming service, since transmission delay (packet latency) that may cayuse buffering is important, a light UPF providing an optional caching functionality for addressing the packet latency may be selected.

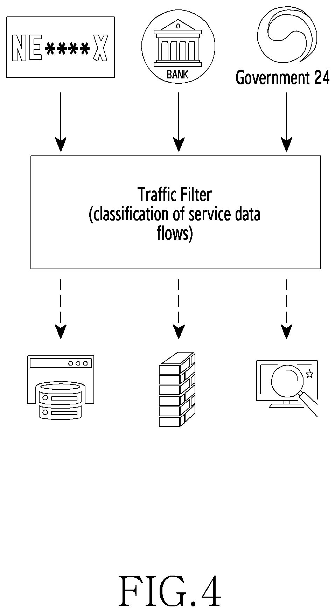

FIG. 4 illustrates a traffic filter that classifies service data flows based on their types, according to an embodiment of the disclosure.

The traffic filter may be implemented in a UE. The traffic filter may classify service data flows used by the UE into different types by using one or more of the following pieces of information. The following information is merely an example and does not limit the disclosure, and other information may be used to classify types of service data flows.
- 5-tuple: a source IP address, a source port number, a destination IP address, a destination port number, and a protocol in use.
- Application ID: an ID used to distinguish an application on a terminal platform or an operating system (OS), for example, Android or iOS.

Service data flows may be classified into the following types, and optional UPF functionality required for the respective service data flows may be listed as follows. However, the classification of the service data flows and the optional UPF functionality according to such classification are merely an example and do not limit the disclosure. The service data flows may be classified into other types, and accordingly, required optional UPF functionality may vary.
- High data rate or low latency requiring services
   * Embodiment: High-resolution video streaming application (e.g., 4K, 8K, VR, AR, and so on)
   * Required optional UPF functionality: a traffic optimization module and a caching module.
- High security-requiring services
   * Embodiment: Financial and government applications.
   * Required optional UPF functionality: a firewall module and a DNS snooping detection module
- A service for which monitoring is necessary (Malicious services).
   * Embodiment: blocked application and lawful interception required application
   * Required optional UPF functionality: a shallow or deep packet inspection module

Table 1 illustrates a packet functionality rule (PFR) related to application of a UPF module to a service data flow according to an embodiment.

**[Table 1]**

| Attribute | | Description |
|---|---|---|
| N4 Session ID | | Identifies the N4 session associated to this PFR |
| Rule ID | | Unique identifier to identify this rule |
| UPF Functionality Information | Precedence | Determines the order, in which the UPF functionality of all available UPF functionalities is applied |
| | UPF Functionality | Identifies the UPF functionality to apply to the packet |
| | Parameters | List of parameters for UPF functionality to apply to the packet |
| | Direction (UL, DL, Both) | Determines which direction (UL, DL or Both) of the packet is applied by the UPF functionality |
| | Mandatory/ Optional | Identifies whether the LPF functionality to apply to the packet is mandatory or optional |
| | Constraints | Identifies any constraints of using UPF functionality in terms of time, amount of data and so on |
| Forwarding Action Rule ID | | The Forwarding Action Rule ID identifies a forwarding action that has to be applied |
| List of Usage Reporting Rule ID(s) | | Every Usage Reporting Rule ID identifies a measurement action that has to be applied |
| List of QoS Enforcement Rule ID(s) | | Every QoS Enforcement Rule ID identifies a QoS enforcement action that has to be applied |

The PFR may include information regarding a UPF module to be applied by the UPF to a service data flow. The PFR may be generated by a PCF or the SMF and may be transmitted to the UPF during an N4 session generation procedure. The PFR may be generated based on one or more of UE subscription data, a URSP rule, and service data flow description information received from the UE.

Table 2 illustrates a packet detection rule (PDR) modified for application of the PFR according to an embodiment.

**[Table 2]**

| Attribute | | Description |
|---|---|---|
| N4 Session ID | | Identifies the N4 session associated to this PDR |
| Rule ID | | Unique identifier to identity this rule. |
| Precedence | | Determines the order, in which the detection information of all rules is applied. |
| Packet Detection Information | Source interface | Contains the values "access side". "core side". "SMF", "N6-LAN", "5C VN internal". |
| | UE IP address | One IPv4 address and/or one IPv6 prefix with prefix length |
| | Network instance | Identifies the Network instance associated with the incoming packet. |
| | CN tunnel info | CN tunnel info on N3, N9 interfaces, i.e. F-TEID. |
| | Packet Filter Set | Details see clause 5.7.6. |
| | Application identifier | |
| | QoS Flow ID | Contains the value of 5QI or non-standardized QFI. |
| | Ethernet PDU Session Information | Refers to all the (DL) Ethernet packets matching an Ethernet PDU session, as further described in clause 5.6.10.2 and in TS 29.244 [65]. |
| | Framed Route Information | Refers to Framed Routes defined in clause 5.6.14. |
| | FQDN Filter for DNS Query | Contains one or more FQDN. FQDN range, and/or any FQDN. |
| | Protocol Description | Indicates service protocol used by the flow (NOTE 8). |
| Outer header removal | | Instructs the UP function to remove one or more outer header(s) (e.g. IP+UDP+GTP, IP + possibly UDP, VLAN tag), from the incoming packet. |
| Packet Functionality Rule ID | | The Packet Functionality Rule ID identifies a UPF functionality that has to be applied. |
| Forwarding Action Rule ID | | The Forwarding Action Rule ID identifies a forwarding action that has to be applied. |
| Multi-Access Rule ID | | The Multi-Access Rule ID identifies an action to be applied for handling forwarding for a MA PDU Session. |
| List of Usage Reporting Rule ID(s) | | Every Usage Reporting Rule ID identifies a measurement act ion that has to be applied. |
| List of QoS Enforcement Rule ID(s) | | Every QoS Enforcement Rule ID identifies a QoS enforcement action that has to be applied. |

A packet functionality rule (PFR) identified by a corresponding packet functionality rule ID may be applied to the service data flow identified by the PDR.

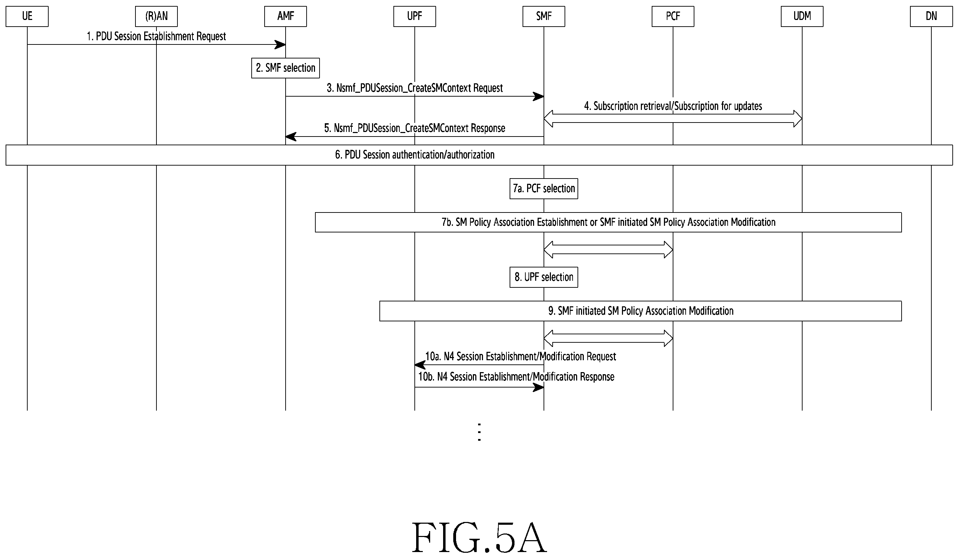

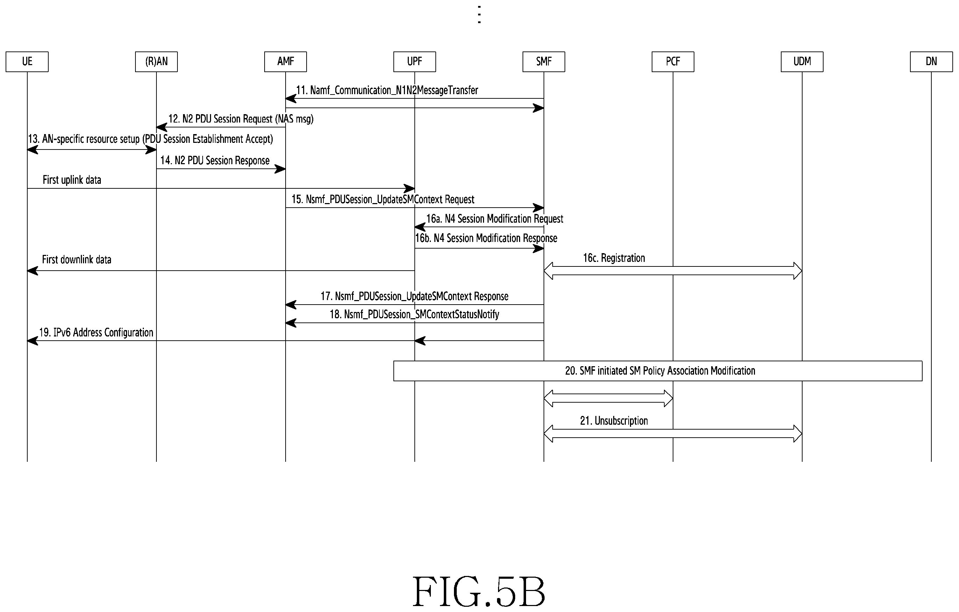

FIG. 5A and FIG. 5B are flowcharts illustrating a PDU session establishment procedure according to an embodiment of the disclosure. FIG. 5A and FIG. 5B may describe a consecutive procedure for establishing a PDU session.

A UE may transmit, to a network, information on a service data flow generated by a traffic filter.

In operation 1, the UE may generate a PDU session establishment request message and transmit the same to the network in order to request establishment of a new PDU session. The PDU session establishment request message may include information (for example, description information of a service data flow) on the service data flow generated by the traffic filter. This information may be transmitted to an SMF through a RAN and an AMF.

In operation 2, the AMF may perform an SMF selection procedure.

In operation 3, the AMF may transmit an Nsmf_PDUSession_CreateSMContext Request message to the SMF.

In operation 4, the SMF and a UDM may perform a subscription retrieval/subscription procedure for updates.

In operation 5, the SMF may transmit an Nsmf_PDUSession_CreateSMContext response message to the AMF.

In operation 6, a PDU session authentication/authorization procedure may be performed to establish a PDU session destined for a specific DN.

In operation 7a, the SMF may perform a PCF selection procedure.

In operation 7B, an SM policy association establishment procedure or an SMF-initiated SM policy association modification procedure may be performed between the SMF entity and the PCF entity. In operation 7b, the SMF may transmit description information of the service data flow to the PCF. The SMF or PCF may generate PFR information by using at least some of UE subscription data, a URSP rule, or the description information of the service data flow.

In operation 8, the SMF may perform a UPF selection procedure.

In operation 9, an SM policy association modification initiated by the SMF may be performed between the SMF entity and the PCF entity.

In operation 10a or operation 10b, an N4 session may be established between the SMF and the UPF. In operation 10a, the SMF transmits an N4 session establishment/modification request message to the UPF. The N4 session establishment/modification request message may include at least some of an N4 session ID, packet detection rules (PDRs), forwarding action rules (FDRs), multi-access rules (MARs), usage reporting rules (URRs), QoS enforcement rules (QERs), session reporting rules (SRRs), trace requirements, port management information, bridge/router information, or packet functionality rules (PFRs).

In operation 10B, the UPF may transmit an N4 session establishment/modification response message to the SMF.

In operation 11, the SMF and the AMF may perform a Namf_Communication _N1N2MessageTransfer procedure.

In operation 12, the AMF may transmit an N2 PDU session request (NAS message) to the (R)AN.

In operation 13, the UE and the (R)AN may perform an AN-specific resource setup procedure (PDU session establishment accept).

In operation 14, the (R)AN may transmit an N2 PDU session response message to the AMF.

Thereafter, the UE may transmit first uplink data to the UPF.

In operation 15, the AMF may transmit an Nsmf_PDUSession_UpdateSMContext request message to the SMF.

In operation 16a, the SMF may transmit an N4 session modification request message to the UPF. In operation 16b, the UPF may transmit an N4 session modification response message to the SMF. In operation 16c, the SMF and the UDM may perform a registration procedure. The UPF may transmit the first downlink data to the UE.

In operation 17, the SMF may transmit an Nsmf_PDUSession_UpdateSMContext Response message to the AMF.

In operation 18, the SMF may transmit an Nsmf_PDUSession_SMContextStatusNotify message to the AMF.

In operation 19, the SMF may configure an IPv6 address configuration for the UE via the UPF.

In operation 20, the SM policy association modification initiated by the SMF may be performed between the SMF entity and the PCF entity.

In operation 21, an unsubscription procedure may be performed between the SMF and the UDM.

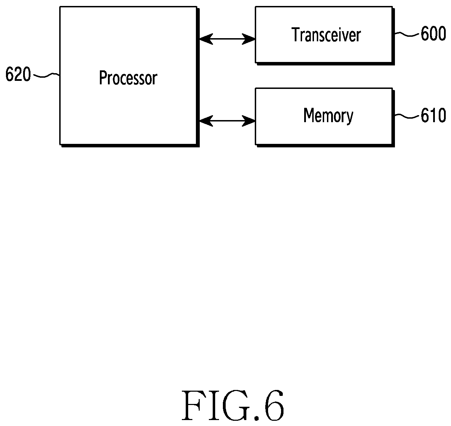

FIG. 6 illustrates a structure of a UE according to an embodiment of the disclosure; and

The UE according to an embodiment of the disclosure may include a processor 620 which controls the overall operation of the UE, a transceiver 600 which includes a transmitter and a receiver, and a memory 610. Of course, the example given above is not limiting, and the UE may include a smaller or larger number of components than the components illustrated in FIG. 6.

According to an embodiment of the disclosure, the transceiver 600 may transmit/receive signals with network entities or other UEs. The signals transmitted/received with base stations or other network entities may include control information and data. In addition, the transceiver 600 may receive signals through a radio channel, output the same to the processor 620, and transmit signals output from the processor 620 through the radio channel.

According to an embodiment of the disclosure, the processor 620 may control the UE to perform operations according to any one of the above-described embodiments. Of course, the processor 620, the memory 610, and the transceiver 600 are not necessarily implemented as separate modules, but may be implemented as a single component unit such as a single chip. Also, the processor 620 and the transceiver 600 may be electrically connected to each other. In addition, the processor 620 may be an application processor (AP), a communication processor (CP), a circuit, an application-specific circuit, or at least one processor.

According to an embodiment of the disclosure, the memory 610 may store data such as basic programs for operations of the UE, application programs, and configuration information. In particular, the memory 610 provides the stored data at the request of the processor 620. The memory 610 may include storage media such as a ROM, a RAM, a hard disk, a CD-ROM, and a DVD, or a combination of storage media. In addition, the memory 610 may include multiple memories. Furthermore, the processor 620 may perform the above-described embodiments of the disclosure, based on the programs for performing the embodiments, stored in the memory 610.

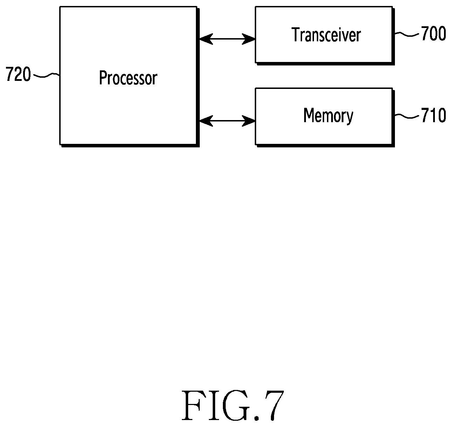

FIG. 7 illustrates a structure of a base station according to an embodiment of the disclosure.

As illustrated in FIG. 7, the base station of the disclosure may include a processor 720, a transceiver 700, and a memory 710. However, components of the base station are not limited to the above-described example. For example, the base station may include a larger or smaller number of components than the above-described components. In addition, the processor 720, the transceiver 700, and the memory 710 may be implemented in the form of a single chip. The processor 720 of FIG. 7 may include at least one processor.

The processor 720 may control a series of processes so that the base station can operate according to the above-described embodiments of the disclosure. For example, according to an embodiment of the disclosure, the processor 720 may control the components of the base station to perform UE scheduling methods according to whether the base station mode is a base station power saving mode or a base station normal mode. The processor 720 may include one or multiple processors, and the processor 720 may execute programs stored in the memory 710 to thereby perform the method for scheduling the UE according to whether the above-described base station mode is a base station energy saving mode or a base station normal mode.

The transceiver 700 may transmit/receive signals with UEs and network entities. The signals transmitted/received with UEs, other base stations or network entities may include control information and data. The transceiver 700 may include an RF transmitter configured to up-convert and amplify the frequency of transmitted signals, an RF receiver configured to low-noise-amplify received signals and downconvert the frequency thereof, and the like. However, this is only an embodiment of the transceiver 700, and the components of the transceiver 700 are not limited to the RF transmitter and the RF receiver. In addition, the transceiver 700 may receive signals through a radio channel, output the same to the processor 720, and transmit signals output from the processor 720 through the radio channel.

According to an embodiment, the memory 710 may store programs and data necessary for the operation of the base station. In addition, the memory 710 may store control information or data included in signals transmitted/received by the base station. The memory 710 may include storage media such as a ROM, a RAM, a hard disk, a CD-ROM, and a DVD, or a combination of storage media. In addition, the memory 710 may include multiple memories. According to an embodiment, the memory 710 may store programs for performing the method for scheduling the UE according to whether the base station mode in the above-described embodiments of the disclosure is a base station energy saving mode or a base station normal mode.

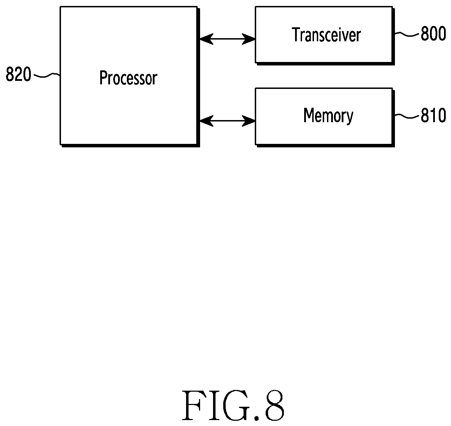

FIG. 8 illustrates a structure of a network entity according to an embodiment of the disclosure.

The network entity according to an embodiment of the disclosure may include a processor 820 which controls the overall operation of the network entity, a transceiver 800 which includes a transmitter and a receiver, and a memory 810. Of course, the example given above is not limiting, and the network entity may include a smaller or larger number of components than the components illustrated in FIG. 8. Furthermore, according to an embodiment of the disclosure, the network entity may refer to a network function (NF), and the NF may include an RAN, an AMF, a PCF, a UDM, an NEF, a UPF, an NRF, an AUSF, an NSSF, an NWDAF, an AF, a DN, etc.

According to an embodiment of the disclosure, the transceiver 800 may transmit/receive signals with at least one of other network entities or base stations. The signals transmitted/received with at least one of other network entities or base stations may include control information and data.

According to an embodiment of the disclosure, the processor 820 may control the network entity to perform operations according to any one of the above-described embodiments. Of course, the processor 820, the memory 810, and the transceiver 800 are not necessarily implemented as separate modules, but may be implemented as a single component unit such as a single chip. Also, the processor 820 and the transceiver 800 may be electrically connected to each other. In addition, the processor 820 may be an application processor (AP), a communication processor (CP), a circuit, an application-specific circuit, or at least one processor. According to an embodiment of the disclosure, the processor 820 may control a series of processes so that the NF can operate according to the above-described embodiments of the disclosure. For example, the processor 820 may control the components of the network entity to perform the method for supporting a network slice change according to the above-described embodiments. The processor 820 may control the components of the network entity to perform the embodiments of the disclosure by executing programs stored in the memory 810.

According to an embodiment of the disclosure, the memory 810 may store data such as basic programs for operations of the network entity, application programs, and configuration information. In particular, the memory 810 provides the stored data at the request of the processor 820. In addition, the memory 810 may store control information or data included in signals transmitted/received by the network entity. The memory 810 may include storage media such as a ROM, a RAM, a hard disk, a CD-ROM, and a DVD, or a combination of storage media. In addition, the memory 810 may include multiple memories. Furthermore, the processor 820 may perform the above-described embodiments of the disclosure, based on the programs for performing the embodiments, stored in the memory 810.

It should be noted that the above-described configuration diagrams, illustrative diagrams of control/data signal transmission methods, illustrative diagrams of operation procedures, and structural diagrams are not intended to limit the scope of the disclosure. That is, all constituent elements, entities, or operation steps described in the embodiments of the disclosure should not be construed as being essential for the implementation of the disclosure, and the disclosure may be implemented without impairing the essential features of the disclosure by including only some constituent elements. Also, the above respective embodiments may be employed in combination, as necessary. For example, the methods proposed in the disclosure may be partially combined with each other to operate a network entity and a terminal.

The above-described operations of a base station or terminal may be implemented by providing any unit of the base station or terminal device with a memory device storing corresponding program codes. That is, a controller of the base station or terminal device may perform the above-described operations by reading and executing the program codes stored in the memory device by means of a processor or central processing unit (CPU).

Various units or modules of an entity, a base station device, or a terminal device may be operated using hardware circuits such as complementary metal oxide semiconductor-based logic circuits, firmware, or hardware circuits such as combinations of software and/or hardware and firmware and/or software embedded in a machine-readable medium. For example, various electrical structures and methods may be implemented using transistors, logic gates, and electrical circuits such as application-specific integrated circuits.

Methods disclosed in the claims or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof. That is, it will be apparent to those skilled in the art that other variants based on the technical idea of the disclosure may be implemented. Also, the above respective embodiments may be employed in combination, as necessary. For example, the methods proposed in the disclosure may be partially combined with each other to operate a network entity and a terminal. Moreover, although the above embodiments have been described based on the 5G or NR system, other variants based on the technical idea of the embodiments may also be implemented in other communication systems such as LTE, LTE-A, or LTE-A-Pro systems.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A user plane function (UPF) entity in a wireless communication system, the UPF entity comprising:
at least one controller; and
at least one memory, communicatively coupled to the at least one controller, storing instructions executable by the at least one controller individually or in any combination to cause the UPF entity to:
receive, from a session management function (SMF) entity, an N4 session establishment request message comprising a packet detection rule (PDR) and a packet functionality rule (PFR) corresponding to the PDR;
based on the PDR and the PFR, determine at least one UPF function to be applied to a service data flow; and
transmit the service data flow to which the at least one UPF function is applied, and
wherein the PFR comprises information on the at least one UPF function to be applied to the service data flow.

2. The UPF entity of claim 1, wherein the instructions further cause the UPF entity to: transmit the service data flow, to which the at least one UPF function is applied, to an entity determined based on a forwarding action rule (FAR) included in the N4 session establishment request message.

3. The UPF entity of claim 1, wherein the PDR comprises an identifier for identifying whether the service data flow is subject to application of the PFR.

4. The UPF entity of claim 1, wherein the PFR comprises at least some of information for determining an order in which the at least one UPF function is applied, information for identifying the at least one UPF function, information on parameters of the at least one UPF function, information on a direction of the service data flow to which the at least one UPF function is applied, information for identifying whether the at least one UPF function is mandatory or optional, and information for identifying a constraint on use of the at least one UPF function.

5. The UPF entity of claim 1, wherein the PFR is generated by a policy control function (PCF) entity or the SMF entity, based on at least some of user equipment (UE) subscription data, a UE route selection policy (URSP) rule, and information on the service data flow received from a terminal, and
wherein the information on the service data flow comprises information on the at least one UPF function required for the service data flow.

6. A method performed by a user plane function (UPF) entity in a wireless communication system, the method comprising:
receiving, from a session management function (SMF) entity, an N4 session establishment request message comprising a packet detection rule (PDR) and a packet functionality rule (PFR) corresponding to the PDR;
based on the PDR and the PFR, determining at least one UPF function to be applied to a service data flow; and
transmitting the service data flow to which the at least one UPF function is applied,
wherein the PFR comprises information on the at least one UPF function to be applied to the service data flow.

7. The method of claim 6, wherein the transmitting of the service data flow to which the at least one UPF function is applied comprises transmitting the service data flow to an entity determined based on a forwarding action rule (FAR) included in the N4 session establishment request message.

8. The method of claim 6, wherein the PDR comprises an identifier for identifying whether the service data flow is subject to application the PFR.

9. A session management function (SMF) entity in a wireless communication system, the SMF entity comprising:
at least one controller; and
at least one memory, communicatively coupled to the at least one controller, storing instructions executable by the at least one controller individually or in any combination to cause the SMF entity to:
transmit, to a user plane function (UPF) entity, an N4 session establishment request message comprising a packet detection rule (PDR) and a packet functionality rule (PFR) corresponding to the PDR, and
wherein the PFR comprises information on at least one UPF function to be applied to a service data flow.

10. The SMF entity of claim 9, wherein the instructions further cause the SMF entity to: receive, from the UPF entity, the service data flow to which the at least one UPF function is applied.

11. The SMF entity of claim 9, wherein the PDR comprises an identifier for identifying whether the service data flow is subject to application of the PFR.

12. The SMF entity of claim 9, wherein the PFR comprises at least some of information for determining an order in which the at least one UPF function is applied, information for identifying the at least one UPF function, information on parameters of the at least one UPF function, information on a direction of the service data flow to which the at least one UPF function is applied, information for identifying whether the at least one UPF function is mandatory or optional, and information for identifying a constraint on use of the at least one UPF function.

13. The SMF entity of claim 9, wherein the instructions further cause the UPF entity to:
receive, from a terminal, information on the service data flow; and
determine the PFR based on at least some of UE subscription data, a UE route selection policy (URSP) rule, and the information on the service data flow, and
wherein the information on the service data flow comprises information on the at least one UPF function required for the service data flow.

14. A method performed by a session management function (SMF) entity in a wireless communication system, the method comprising:
transmitting, to a user plane function (UPF) entity, an N4 session establishment request message including a packet detection rule (PDR) and a packet functionality rule (PFR) corresponding to the PDR,
wherein the PFR comprises information on at least one UPF function to be applied to a service data flow.

15. The method of claim 14, further comprising: receiving, from the UPF entity, the service data flow to which the at least one UPF function is applied.
